# EUROPÄISCHE PATENTSCHRIFT

(11) **EP 3 137 332 B1**
(45) Veröffentlichungstag und Bekanntmachung des Hinweises auf die Patenterteilung: **24.04.2024**
(21) Anmeldenummer: 14730755.7
(22) Anmeldetag: 30.04.2014
(51) Int. Cl.: B60K 17/16, B60K 23/08

(54) **ZUSCHALTDIFFERENTIAL**
SELECTABLE DIFFERENTIAL
DIFFÉRENTIEL DÉBRAYABLE

(43) Veröffentlichungstag der Anmeldung: 08.03.2017
(73) Patentinhaber: GKN Automotive Limited, Redditch Worcestershire B98 0AJ (GB)
(72) Erfinder: NETT, Hans-Peter, 53518 Adenau (DE); HERBER, Sven, 50354 Hürth (DE); WECKERLING, Thomas, 53757 Sankt Augustin (DE)
(74) Vertreter: btb IP Bungartz Baltzer Partnerschaft mbB Patentanwälte
(86) Internationale Anmeldenummer: PCT/EP2014/058893
(87) Internationale Veröffentlichungsnummer: WO 2015/165537

(56) Entgegenhaltungen:
- EP-A2- 1 293 373
- DE-A1- 3 913 487
- DE-A1-102008 063 904
- JP-A- 2002 370 557
- US-A1- 2005 261 101
- US-A1- 2006 046 890

## Beschreibung

Die Erfindung betrifft ein Differential eines Kraftfahrzeugs nach dem Oberbegriff des Anspruchs 1. Diese Differentiale werden insbesondere als Achsdifferential eines Personenkraftwagens verwendet und weisen ein Eingangsglied, über das die Antriebsleistung in das Achsdifferential eingeleitet wird, und zwei Ausgangsglieder, über die die Antriebsleistung auf Leistungsabnehmer weitergeleitet wird, sowie eine zwischen Eingangsglied und Ausgangsgliedern angeordnete, formschlüssig wirkende Differentialeinheit mit Differentialgliedern eines Differentialgetriebes auf, über die Antriebsleistung von dem Eingangsglied verzweigt auf die Ausgangsglieder unter Zulassung einer Differenzdrehzahl zwischen den Ausgangsgliedern übertragen werden kann.

Ein derartiges Differential ist aus der DE 10 2008 063 904 A1 bekannt. Es dient nicht nur, wie die allgemein bekannten Achsdifferentiale, zum Ausgleich der Differenzdrehzahlen eines angetriebenen kurveninneren Rades und des angetriebenen kurvenäu-ßeren Rades derselben Achse bei Kurvenfahrt. In Fällen, in denen der Antriebsstrang eines Kraftfahrzeugs über einen permanent angetriebenen Primärantriebsstrang verfügt, dem zur Herstellung eines Allradantriebs ein Sekundärantriebsstrang zugeschaltet werden kann (Hang-On Allradkonzept), kann es sinnvoll sein, die Sekundärantriebsstrangkomponenten dann, wenn der Sekundärantriebsstrang nicht angetrieben wird, vollständig vom Primärantriebsstrang abzukoppeln und stillzulegen, das heißt sowohl vom Primärantriebsstrang als auch von den Sekundärantriebsrädern zu entkoppeln. Hierdurch werden Leistungsverluste, insbesondere Schleppverluste, im abgeschalteten, stillgelegten Sekundärantriebsstrang vermieden, die ansonsten insbesondere dann durch Reibungsverluste (in Eingriff befindliche Zahnräder, Lagerreibungen), durch Planschverluste (in Ölreservoire eintauchende Komponenten) oder durch zusätzlichen Rotationsbeschleunigungsbedarf Leistungsverluste verursacht werden können, wenn die Sekundärantriebsstrangkomponenten während der Fahrt von den auf der Straße abrollenden Rädern des Sekundärantriebsstrangs geschleppt werden.

Die in der DE 10 2008 063 904 A1 gezeigte Lösung ermöglicht das selektive Zu- oder Abschalten eines Sekundärantriebs über eine Zuschaltkupplung, die zwischen einem inneren Differentialkorb, in dem das klassische Differential angeordnet ist, und einem äußeren Differentialkorb vorgesehen ist. Durch Betätigung der Zuschaltkupplung wird die Verbindung zwischen innerem Differentialkorb und äußerem Differentialkorb hergestellt bzw. aufgehoben, so dass das Differential selektiv mit der Antriebswelle gekoppelt bzw. von der Antriebswelle des Sekundärantriebs entkoppelt werden kann. Dies ist zwar günstig, jedoch können nach dem Entkoppeln Nachlaufeffekte durch ausdrehende Bauteile und damit Verlustleistungen entstehen.

Eine ähnliche Lösung, allerdings mit den gleichen Nachteilen, zeigen die DE 39 13 487 A1, die US 2006/046 890 A1 und die EP 1 293 373 A2.Auch die US 2005/261101 A1 und die JP 2002 370557 A beschreiben eine rotierende Lagerung eines inneren Differentialkorbs in einem äußeren Differentialkorb, der über eine reibschlüssige Kupplung mit dem inneren Differentialkorb selektiv gekoppelt werden kann, um den Sekundärantrieb zuzuschalten.

Zu den sinnvollerweise stillzulegenden Sekundärantriebsstrangkomponenten können auch Komponenten eines im Sekundärantriebsstrang vorgesehenen Achsdifferentials gehören. Ein derartiges Antriebskonzept offenbart die EP 2 416 036 A2 für den Fall des Einsatzes einer nicht formschlüssig wirkenden Ausgleichseinheit, bei der außerdem im Bereich einer PTU (PowerTake-Off Unit) eine Synchronisation mit einer Abbremseinrichtung vorgesehen ist, über die nicht nur der Sekundärantriebsstrang vom Primärantriebsstrang entkoppelt werden kann, sondern zusätzlich auch gewährleistet ist, dass die Komponenten des abgeschalteten Sekundärantriebsstrangs vollständig stillgelegt werden können. Durch die Anordnung der Synchronisation und die Abbremseinrichtung an der PTU wirken diese Bauteile jedoch entfernt von den Bauteilen, die die wesentliche Masse der stillzulegenden Komponenten bilden. Die Abbildung dieser Synchronisations- und Abbremsfunktion im Gesamtantriebsstrang ist dadurch wenig kompakt und die beim Synchronisations- und Abbremsvorgang aufzubringenden Kräfte sind nur durch relativ groß zu dimensionierende Komponenten einer leistungsfähigen Akuatorik zu gewährleisten. Dies gilt insbesondere dann, wenn der Antriebsstrang nicht wie in der EP 2 416 036 A2 offenbart über eine differentiallose, kupplungsgesteuerte Ausgleichseinheit verfügt, sondern ein von schwereren Komponenten gebildetes klassisches und formschlüssig arbeitendes Differentialgetriebe vorgesehen ist.

Aufgabe der Erfindung ist es unter anderem, in einem Gesamtantriebsstrang die für die Ab- und Zuschaltung eines Sekundärantriebsstrangs zu einem permanent angetriebenen Primärantriebsstrang herangezogenen mechanischen Mechanismen insgesamt zentraler, kompakter und belastbarer, gleichwohl aber energieeffizient zu gestalten.

Diese Aufgabe wird durch ein Differential nach Anspruch 1 gelöst.

Die Erfindung betrifft den Entkopplungsvorgang des eingangs genannten Differentials, also den Übergang von einem Connect in einen Disconnect-Betrieb. Diesem sollte ein Abbremsen der Sekundärantriebsstrangkomponenten nachgeschaltet sein, um gewährleisten zu können, dass die Sekundärantriebskomponenten nicht durch Nachlaufeffekte oder infolge hydrodynamischer Reibungseffekte weiterrotieren und unerwünschte Schleppleistung verursachen. Eine Abbremseinrichtung muss zum einen ausreichende Bremskräfte sicherstellen können, um die Gesamtheit der Sekundärantriebsstrangkomponenten zügig abbremsen zu können. Da die Zeitanteile im Connect-Betrieb über die Fahrzeuglebensdauer gesehen typischerweise sehr gering sind, sollte zum anderen gewährleistet sein, dass die Abbremsung der Sekundärantriebsstrangkomponenten selbsttätig aus sich heraus und passiv erfolgen kann. "Aus sich heraus" bedeutet, dass die Bremsenbetätigung im Disconnect-Betrieb vom System selbst aufgebracht wird (zum Beispiel durch integrierte und entsprechend angeordnete Federelemente), und "passiv" bedeutet, dass die Bremse im Disconnect-Betrieb dauerhaft betätigt gehalten wird, ohne dass hierfür dauerhaft und aktiv eine Bremsenbetätigungskraft erzeugt werden müsste, wie zum Beispiel durch ein Zur-Verfügung-Stellen eines dauerhaft anliegenden Hydraulikdrucks oder sonstiger aktiver Energiezuführung.

Am Differential ist erfindungsgemäß hierzu eine Abbremseinrichtung vorgesehen, die eine Bremskraft auf das Eingangsglied oder auf mit dem Eingangsglied drehfest verbundene Sekundärantriebsstrangkomponenten ausübt, wenn die Ausgangsglieder vom Eingangsglied entkoppelt sind.

Im Antriebsleistungsfluss des neuen Differentials ist, wie auch schon bei den eingangs genannten, bekannten Differentialen, eine zwischen Eingangsglied und Ausgangsgliedern angeordnete Kopplungseinrichtung vorgesehen, mittels der die Ausgangsglieder und das Eingangsglied voneinander entkoppelt werden können.

Ein zusätzlicher Aspekt eines solchen Differentials ist, dass die Zuschaltung des Sekundärantriebsstrangs, also der Wechsel vom Disconnect-2WD Betrieb (nachfolgend Disconnect-Betrieb) zum Connect-AWD Betrieb (nachfolgend Connect-Betrieb) zum Primärantriebsstrang über eine formschlüssig wirkende Kopplungseinrichtung während der Fahrt synchronisiert erfolgen muss, das heißt es muss eine Drehzahlangleichung zwischen den formschlüssig zur verkoppelnden Bauteilen erfolgen, um das formschlüssige Ineinander-Eingreifen der leistungsübertragenden Komponenten zu ermöglichen. Eine derartige Synchronisation muss sich gut in die Gesamtkonstruktion einfügen, sollte wenig zusätzlichen Bauraum erfordern, konstruktiv einfach ausgeführt und betriebssicher sowie reaktionsschnell zu betreiben sein.

Das Differential weist einen äußeren mit dem Eingangsglied verbundenen Differentialkorb und einen inneren, das formschlüssig wirkende Differentialgetriebe aufnehmenden Differentialkorb auf, und das Differential umfasst eine Synchronisationseinheit, die zwischen dem äußeren Differentialkorb und dem inneren Differentialkorb angeordnet ist und mittels der die Drehzahlen des äußeren Differentialkorb und des inneren Differentialkorb für einen Zuschaltvorgang angeglichen werden können.

Ein weiterer Aspekt betrifft die Schleppverlustminimierung im Disconnect-Betrieb. Hier sollte gewährleistet sein, dass die Bauteile des Differentials möglichst umfassend stillgelegt werden können, also der wesentliche Teil der Masse der den Sekundärantriebsstrang bildenden Komponenten nicht mitgeschleppt wird, ein möglichst großer Anteil der Lagerungen und Zahnräder steht und der Beölungsbedarf möglichst umfassend entfällt. Im Idealfall verursacht der zuschaltbare Allradantrieb gegenüber einem Fahrzeug, das erst gar nicht über einen zuschaltbaren Sekundärantriebsstrang verfügt, keine zusätzliche Schleppleistung in dem Fall, in dem der Sekundärantriebsstrang nicht zugeschaltet ist.

Hierzu sind die Differentialglieder des Differentialgetriebes innerhalb eines inneren Differentialkorbs axial und radial geführt bzw. gelagert. Der innere Differentialkorb ist dann in einem Differentialgehäuse und/oder in einem äußeren Differentialkorb geführt.

Hierdurch wird zum einen vermieden, dass ein inneres Differentialglied im Disconnect-Betrieb bei Geradeausfahrt eine Rotationsbewegung relativ zu einem angrenzenden Bauteil, gegenüber dem es mittels einer Lagerung geführt ist, ausführt. Zum anderen führt eine solche Ausgestaltung dazu, dass das Differentialgetriebe, zu dem insbesondere die Ausgleichsräder, der Ausgleichsradträger und die Seitenräder des Differentials gehören, im Disconnect-Betrieb keinen Beölungsbedarf hat, da es als Gesamtheit im Block umlaufen kann. Ferner tritt bei Geradeausfahrt auch keine durch Verzahnungseingriffe verursachte Reibung auf. Die Differentialeinheit, die mit den Seitenwellen rotiert und zu der neben den Differentialgliedern des Differentialgetriebes auch ein innerer Differentialkorb des Differentials zu zählen ist, kann so reibungsarm in einem Differentialgehäuse und/oder in einem äußeren Differentialkorb gelagert werden ohne selbst nennenswerte innere Verlustleistung zu erzeugen.

Der äußere Differentialkorb kann als seitlich offener, tassenförmiger Differentialkorb ausgestaltet sein. Diese Gestaltung ermöglicht die Anordnung der Kopplungseinrichtung und einer Synchronisation auf der Seite der seitlichen Öffnung des Differentialkorbs und erlaubt ein einfaches Einsetzen der Differentialeinheit mit dem inneren Differentialkorb in den seitlich offenen äußeren Differentialkorb bei der Montage. Am äußeren Umfang des äußeren Differentialkorbs kann ein als Eingangsglied vorgesehenes Tellerrad angeordnet sein. Eine tassenförmige Ausgestaltung bedeutet insbesondere, dass sich der Öffnungsquerschnitt, den der äußere Differentialkorb von seiner engsten Stelle ausgehend in axialer Richtung bildet, erweitert oder konstant bleibt.

Ferner kann vorgesehen sein, dass der äußere Differentialkorb über den äußeren seitlichen Rand der der Kopplungseinrichtung zugewandten seitlichen Öffnung im Differentialgehäuse gelagert ist. Eine derartige Lagerung mit einem gegenüber einer herkömmlichen Lagerung vergrößerten Wälzlager schafft radial innerhalb der Lagerung zusätzlichen Platz für die Kopplungseinrichtung, die Synchronisation, die Abbremseinrichtung und die für die Betätigung der Komponenten erforderliche Aktuatorik. Demnach können sich die Kopplungseinrichtung und/oder die Synchronisation und/oder die Abbremseinrichtung und/oder die für die Betätigung dieser Komponenten erforderliche Aktuatorik zumindest teilweise radial innerhalb der Lagerung des äußeren Differentialkorbs befinden.

Die genannte Ausgestaltung ermöglicht außerdem, dass im Connect-Betrieb ein Kraftfluss von außen nach innen gewährleistet ist, nämlich vom Tellerrad (Eingangsglied) über den äußeren Differentialkorb und die Kopplungseinrichtung auf den inneren Differentialkorb.

Durch die Anordnung der Abbremseinrichtung am Differential ist eine kompakte Bauform ermöglicht, bei der die Bremskraft unmittelbar auf die die abzubremsende Masse im Wesentlichen ausmachenden Komponenten des Sekundärantriebsstrangs wirken kann. Dadurch, dass zum Beispiel ein typischerweise das Eingangsglied darstellendes Tellerrad als Teil eines Winkeltriebs mit einer Längswelle formschlüssig verzahnt ist, wird auch die Längswelle zügig abgebremst.

Die Abbremseinrichtung umfasst bevorzugt ein Federelement und wirkt federbelastet auf das Eingangsglied oder auf eine mit dem Eingangsglied drehfest verbundene Komponente des Sekundärantriebsstrangs. Ein Federelement kann bei entsprechender Dimensionierung eine hohe Bremskraft generieren, zu deren Aufrechterhalten es nicht einer andauernden Zuführung von Energie bedarf, da ein Federelement als passives Bauteil eingesetzt werden kann, das in seiner Ruhestellung nicht von andauernder Energiezuführung abhängig ist. Das die zum Abbremsvorgang benötigte Federkraft bereitstellende Federelement ist daher bevorzugt derart in das Differential integriert, dass der Ruhezustand des Federelements im Disconnect-Betrieb eingenommen wird, in dem das Federelement die Bremskraft zur Verfügung stellt. So steht die Bremskraft im Disconnect-Betrieb dauerhaft ohne Zuführung weiterer Energie zur Verfügung. Die Energiezuführung muss daher lediglich für den gegenüber dem Disconnect-Betrieb deutlich geringere Zeitanteile einnehmenden Connect-Betrieb erfolgen, also für den Kopplungsvorgang und das dauerhafte Halten der Sekundärantriebsglieder im gekoppelten Zustand.

Als besonders vorteilhaft wird angesehen, wenn die Federkennlinie der die Bremskraft zur Verfügung stellenden Einzelfeder oder eines Federpakets im für die hier beschriebene Anwendung relevanten Teilabschnitt negativ oder zumindest degressiv ist. Die Kopplungskraft, die benötigt wird, die Kopplungsvorrichtung gegen die Federkraft des Federelements im Connect-Betrieb zu halten, kann so gegenüber einem Federelement mit nicht degressiver oder nicht echt negativer Federkennlinie wirksam begrenzt werden. Gleichzeitig ist gewährleistet, dass die Bremskraft, die das Federelement im Disconnect-Betrieb zur Verfügung stellen kann, im Verhältnis zur Kopplungskraft gegenüber einer Feder mit nicht degressiver Kennlinie, hoch sein kann.

Vorteilhaft bei der vorstehend beschriebenen Ausgestaltung ist außerdem, dass das Federelement als Rückstellfeder der Kopplungseinrichtung eingesetzt werden kann. Die Federkraft wirkt dabei als Rückstellkraft, die die Kopplungseinrichtung aus der Kopplungslage, in der Eingangsglied und Ausgangsglieder zum Übertragen der Antriebsleistung miteinander verkoppelt sind, in die Entkopplungslage drängt, in der Eingangsglied und Ausgangsglieder voneinander entkoppelt sind. Das Verkoppeln und Synchronisieren erfolgt also durch aktive Energiezuführung, bevorzugt durch hydraulischen Druck, wobei hierbei das Federelement gespannt wird. Das Entkoppeln erfolgt selbsttätig bei Abschalten der externen Energiezuführung infolge des Entspannens des Federelements.

Besonders vorteilhaft kommt als Federelement ein Tellerfederpaket oder eine einzelne Tellerfeder zum Einsatz, wobei das Federelement bevorzugt derart angeordnet bzw. in das Differential integriert ist, dass die Tellerfeder(n) über bis in die Nulllage hinein oder darüber hinaus verformbar ist. Zu diesem Zweck können bei einem Tellerfederpaket Abstandselemente zwischen den Tellerfedern vorgesehen sein, die die Verformung über die Nulllage hinaus ermöglichen, in dem sie verhindern, dass die einzelnen Tellerfedern des Tellerfederpakets auf Block fahren können.

Die Lage, die das Federelement im Disconnect-Betrieb einnimmt, liegt dabei auf einer Seite der Nulllage, und die Lage, die das Federelement im Connect-Betrieb einnimmt, liegt im Vergleich zu der Lage im Disconnect-Betrieb unmittelbar vor der Nulllage, in der Nulllage selbst oder nach Durchschreiten der Nulllage auf der anderen Seite der Nulllage.

Die Kopplungseinrichtung weist außerdem bevorzugt einen in Relation zum Federelement und zu Kopplungsgliedern der Kopplungseinrichtung radial außen liegenden Druckkolben auf. Dies hat den Vorteil, dass die Beaufschlagung des bevorzugt als Ringkolbens ausgeführten Druckkolbens mit der für den Koppelvorgang erforderlichen Energie in konstruktiv einfacher Weise durch die Gehäusewandung erfolgen kann und ansonsten erforderliche Druckölbohrungen oder Kabel- bzw. Leitungsführungen ins Innere des Differentialgehäuses entfallen können.

In einer besonderen Ausgestaltung kann vorgesehen sein, dass die Schmierölversorgung für das Differentialgetriebe und bzw. oder dessen Lagerung durch den Drucckolben hindurch erfolgt.

Auch kann vorgesehen sein, dass das Differential einen äußeren, mit dem Eingangsglied verbundenen Differentialkorb und einen inneren, das Differentialgetriebe aufnehmenden Differentialkorb aufweist und das Differential eine Synchronisation umfasst, die zwischen dem äußeren Differentialkorb und dem inneren Differentialkorb angeordnet ist.

In einer weiteren Ausgestaltung des Differentials kann vorgesehen sein, dass der äu-ßere Differentialkorb über den äußeren seitlichen Rand einer seitlichen Öffnung im Differentialgehäuse mittels einer Lagerung gelagert ist.

Weiterhin kann vorgesehen sein, dass sich die Synchronisation und bzw. oder die Kopplungseinrichtung und bzw. oder eine Abbremseinrichtung und bzw. oder eine für die Betätigung dieser Komponenten erforderliche Aktuatorik zumindest teilweise radial innerhalb der Lagerung des äußeren Differentialkorbs befinden.

In einer weiteren Ausgestaltung des Differentials kann vorgesehen sein, dass die Differentialglieder Ausgleichsradträger, Ausgleichsrad und Seitenrad umfassenden des Differentialgetriebes ausschließlich innerhalb des inneren Differentialkorbs geführt sind und der innere Differentialkorb ausschließlich in einem Differentialgehäuse und bzw. oder in einem äußeren Differentialkorb gelagert ist.

In einer weiteren Ausgestaltung des Differentials kann vorgesehen sein, dass die Abbremseinrichtung einen Bremsring aufweist, der beim Abbremsvorgang zwischen einer mit dem Eingangsglied drehfest verbundenen Komponente des Sekundärantriebsstrangs und dem Differentialgehäuse verklemmt wird.

In einer weiteren Ausgestaltung des Differentials kann vorgesehen sein, dass die Abbremseinrichtung zumindest eine reibschlüssig gegeneinander wirkende Bremsflächenpaarung aufweist, wobei die Bremsflächen eine Kegelstumpfoberfläche bilden oder Teile einer einzigen Kegelstumpfoberfläche darstellen.

Schließlich kann das Federelement die Rückstellfeder der Kopplungseinrichtung sein.

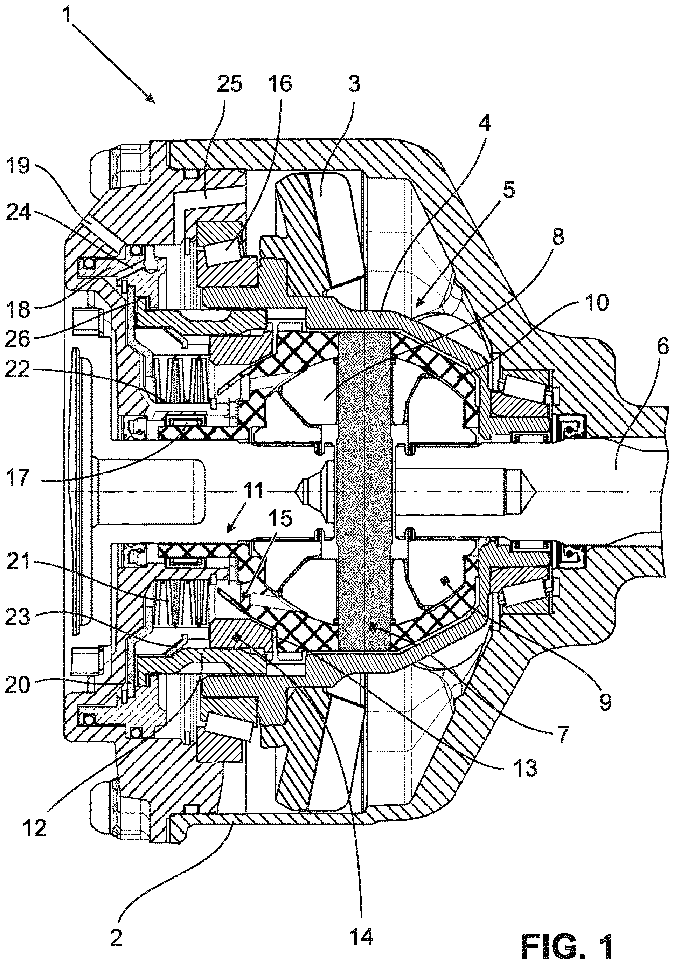

Weitere Merkmale und Vorteile der Erfindung ergeben sich aus den Unteransprüchen und aus der nachfolgenden Beschreibung des in Figur 1 gezeigten bevorzugten Ausführungsbeispiels.

In den Zeichnungen zeigt:
- Fig. 1: ein Differential als Achsdifferential eines Personenkraftwagens mit einer Kopplungseinrichtung zum Entkoppeln des Eingangsglieds von den Ausgangsgliedern,
- Fig. 2: eine zum in Figur 1 gezeigten Differential alternative Ausgestaltung eines Differentials,
- Fig. 3: eine schematische Darstellung eines im Differential nach Figur 1 als Federelement verwendeten Tellerfederpakets und dessen Federkennlinie, und
- Fig. 4: eine schematische Darstellung einer im Differential nach Figur 2 als Federelement verwendbaren Einzeltellerfeder und deren Federkennlinie.

In Figur 1 ist ein Differential 1 eines Personenkraftwagens gezeigt, das in einem Differentialgehäuse 2 aufgenommen ist. Das Eingangsglied 3 ist durch ein Tellerrad gebildet, dass außenseitig an einem Differentialkorb drehfest angeordnet ist. Die über das Tellerrad in das Differential 1 eingebrachte Antriebsleistung (eine Längswelle und ein mit dem Tellerrad zur Bildung eines Winkelgetriebes in Eingriff stehendes Antriebsrad sind nicht gezeigt) wird über die Differentialglieder (Ausgleichsradträger 7, Ausgleichsrad 8, Seitenrad 9) eines Differentialgetriebes 5 auf zwei Ausgangsglieder 6 des Differentials 1 verzweigt weitergeleitet, die dann die Antriebsleistung über Seitenwellen auf die der Achse zugeordneten Antriebsräder weiterleiten. Differentialglieder des Differentialgetriebes 5 sind insbesondere ein Ausgleichsradträger 7, die Ausgleichsräder 8 und die Seitenräder 9. Insoweit unterscheidet sich das in Figur 1 gezeigte Differential 1 nicht von dem Grundaufbau eines herkömmlichen Differentials 1.

Anders als bei herkömmlichen Differentialen 1 weist die in Figur 1 dargestellte Konstruktion jedoch nicht nur einen einzigen Differentialkorb auf, sondern einen äußeren Differentialkorb 4 und einen inneren Differentialkorb 10, die über eine Kopplungseinrichtung 11 miteinander verkoppelt oder voneinander entkoppelt werden können. Dies geschieht vor dem Hintergrund, dass der Gesamtantriebsstrang des Fahrzeugs, für den das in Figur 1 dargestellte Differential 1 bestimmungsgemäß vorgesehen ist, ein Antriebsstrang mit einem permanent angetriebenen Primärantriebsstrangabschnitt und einem zu- oder abschaltbaren Sekundärantriebsstrangabschnitt ist. Die Konstruktion des in Figur 1 dargestellten Differentials 1, das als Sekundärantriebsstrangkomponente für den Sekundärantriebsstrang vorgesehen ist, dient insbesondere dazu, einen Teil des Sekundärantriebsstrangs nicht nur vom Primärantriebsstrang zu entkoppeln, was über eine im Bereich der Primärachse vorgesehene PTU oder sonstige Kupplungsvorrichtung erfolgen kann, sondern gleichzeitig auch von den Sekundärantriebsrädern zu entkoppeln, um den zwischen PTU oder sonstiger Kupplungseinrichtung und einer Kopplungseinrichtung 11 des Differentials 1 liegenden Teil des Antriebsstrangs vollständig stilllegen zu können.

Die Kopplungseinrichtung 11 weist eine axial verschiebliche Schiebemuffe 12 auf, die über eine äußere Verzahnung formschlüssig mit dem äußeren Differentialkorb 4 zusammenwirkt. Diese Schiebmuffe 12, die in Figur 1 in einer Disconnect-Stellung gezeigt ist, in der sich der innere Differentialkorb 10 gegenüber dem äußeren Differentialkorb 4 frei drehen kann, kann über einen hydraulisch betätigten Kopplungs- und Synchronisationsmechanismus in eine Connect-Stellung überführt werden, in der eine innere Verzahnung der Schiebemuffe 12 in Eingriff mit dem inneren Differentialkorb 10 oder, wie in Figur 1, mit einem drehfest an dem inneren Differentialkorb 10 vorgesehenen Mitnehmerring 13 gerät. In der Connect-Stellung wird dann die Antriebsleistung ausgehend vom äußeren Differentialkorb 4 über die äußere und innere Verzahnung der Schiebemuffe 12 auf den inneren Differentialkorb 10 übertragen.

Mit der Schiebemuffe 12 wirkt über eine Synchronisation 15 ein Synchronring 14 zusammen, der bei einem Verschieben der Schiebemuffe 12 aus der Disconnect-Stellung in die Connect-Stellung die ansonsten in der Disconnect-Stellung stehende Schiebemuffe 12 und die mit ihr in Eingriff befindlichen Sekundärantriebsstrangkomponenten auf Synchrondrehzahl beschleunigt, um das anschließende Einrücken der Schiebemuffe 12 in die Connect-Stellung zu ermöglichen.

Um die Kopplungseinrichtung 11 mit der Synchronisationseinheit platzsparend im Differentialgehäuse 2 und außerdem nahe am inneren Differentialkorb 10 anordnen zu können, ist der äußere Differentialkorb 4 tassenförmig ausgestaltet und außerdem über ein im Innendurchmesser gegenüber herkömmlichen Differentialkorblagern vergrößertes Wälzlager 16 im Differentialgehäuse 2 gelagert, welches im Disconnect-Betrieb still steht und keine Reibung verursacht. Der geschlossen ausgebildete, innere Differentialkorb 10 kann so leicht in den äußeren Differentialkorb 4 eingeschoben werden und die Kopplungs- und Synchronisationseinrichtung findet innerhalb des Wälzlagers 16 Platz.

Durch die beschriebene Ausgestaltung des äußeren Differentialkorbs 4 wird insbesondere vermieden, dass zur Betätigung der Kopplungseinrichtung 11 erforderliche Betätigungsglieder durch den äußeren Differentialkorb 4 hindurchgreifen müssen, was die Konstruktion insgesamt deutlich vereinfacht.

Der innere Differentialkorb 10 ist über weitere Wälzlager 17 reibungsarm im Differentialgehäuse 2 oder im äußeren Differentialkorb 4 gelagert. Die Differentialglieder (Ausgleichsradträger 7, Ausgleichsräder 8, Seitenräder 9) sind außerdem ausschließlich innerhalb des geschlossenen inneren Differentialkorbs 10 gelagert, insbesondere also ausschließlich gegenüber den in den inneren Differentialkorb 10 hineinragenden Halbwellen (Ausgangsglieder 6) und/oder gegenüber dem im inneren Differentialkorb 10 befindlichen Ausgleichsradträger 7 und/oder gegenüber dem inneren Differentialkorb 10 selbst. Dies hat den Vorteil, dass der innere Differentialkorb 10 im Disconnect-Betrieb als Block umlaufen kann und auch unter Berücksichtigung der Lagerung des inneren Differentialkorbs 10 über die Wälzlager 17 gegenüber einem reinen 2WD-Fahrzeug ohne zuschaltbare Sekundärachse nur die bei Kurvenfahrt auftretenden Ausgleichsbewegungen der Differentialglieder zusätzliche Verlustleistung erzeugen.

Die Betätigung der Kopplungs- und Synchronisationseinrichtung erfolgt bei der in Figur 1 gezeigten Ausführungsform beispielhaft hydraulisch. Selbstverständlich können auch anderen Betätigungsmechanismen vorgesehen werden, wie etwa eine elektromagnetische Betätigung oder eine Betätigung über einen motorisch betriebenen Rampenmechanismus.

Der hydraulische Betätigungsmechanismus weist als Druckkolben einen außen liegenden Ringkolben 18 auf, wobei der hydraulische Druckraum direkt über eine einfach nur das Differentialgehäuse 2 durchdringende Druckölbohrung 19 zugänglich ist. Aufwendige Druckölbohrungen ins Gehäuseinnere sind so entbehrlich.

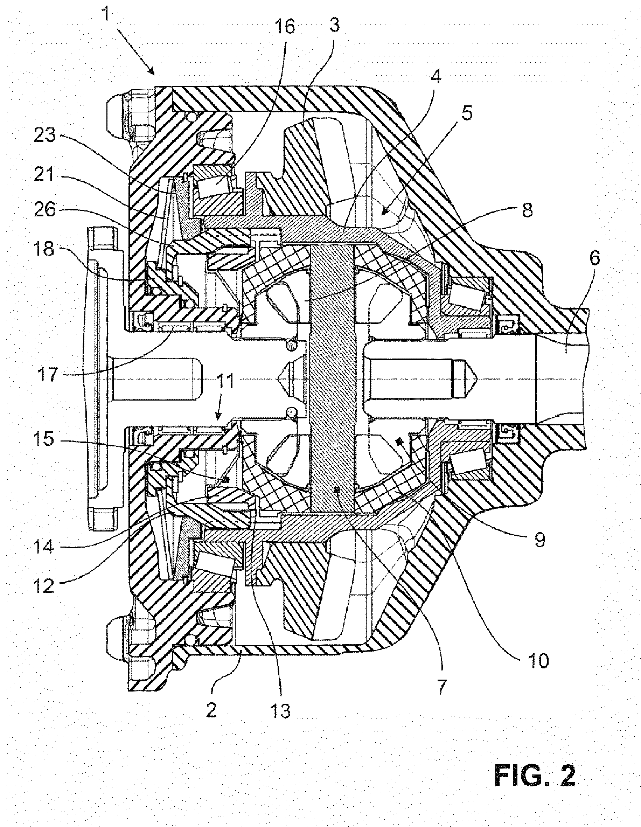

Bei der hydraulischen Betätigung der Kopplungseinrichtung 11 mit der Synchronisationseinheit drückt der Ringkolben 18 über eine axial an diesem gesicherte Mitnehmerscheibe 20 bzw. Druckscheibe gegen ein, gegen axiale Verschiebung gegen das Differentialgehäuse 2 gesichertes Tellerfederpaket 21. Dieses Tellerfederpaket 21 weist eine Mehrzahl von Tellerfedern auf, die über Abstandsringe 22 auf Abstand gehalten werden, so dass das Tellerfederpaket 21 im Belastungsfall über dessen Nulllage hinaus zusammengedrückt werden kann, wobei die Connect-Stellung der Schiebemuffe 12 um die Nulllage herum, bevorzugt kurz nach Überschreiten der Nulllage, erreicht wird, so dass die Energie, die zum dauerhaften Halten der Connect-Stellung zur Verfügung gestellt werden muss, infolge des degressiven Federverhaltens begrenzt werden kann. Der maximale Verschiebeweg des Ringkolbens 18 bzw. die Begrenzung des axialen Verschiebewegs gegenüber dem Differentialgehäuse 2 ist hieran angepasst. Ein derartiges Tellerfederpaket 21 ist in Figur 2 mitsamt Federkennlinie schematisch dargestellt. Die Mitnehmerscheibe 20 bzw. Druckscheibe ist an ihrem radial innen liegenden Rand geschlitzt, um in den Teil des Differentialgehäuses 2, innerhalb dem das Tellerfederpaket 21 geführt ist, hineinragen zu können. Diese Schlitzung stellt gleichzeitig eine Verdrehsicherung dar.

Gleichzeitig wirkt das Tellerfederpaket 21 als Rückstellfeder, mit der nicht nur der Ringkolben 18 aus der Stellung, die er im Connect-Betrieb einnimmt, in die Stellung, die er im Disconnect-Betrieb einnimmt (Figur 1), bei nachlassendem Hydraulikdruck zurückgedrängt wird. Vielmehr drängt das sich entspannende Tellerfederpaket 21 über die Mitnehmerscheibe 20 und den Ringkolben 18 auch die von dem Ringkolben 18 übergriffene Schiebemuffe 12 in axialer Richtung aus der Connect-Stellung in die Disconnect-Stellung. Das Tellerfederpaket 21 ist somit nicht nur eine Rückstellfeder für den Ringkolben 18, sondern bildet außerdem die Ausrückfeder für einen federbelasteten Ausrückmechanismus der Kopplungseinrichtung 11.

Hinzu kommt, dass das Tellerfederpaket 21 die Schiebemuffe 12 mit einem als Bremsfläche ausgebildeten Oberflächenbereich derselben gegen eine korrespondierende Bremsfläche eines Bremsrings 23 drängt. Dieser ist im Differentialgehäuse 2 drehsicher gelagert und gewährleistet das Abbremsen der im Disconnect-Betrieb des Kraftfahrzeugs stillzulegenden Sekundärantriebsstrangkomponenten, wobei mit der Schiebemuffe 12 lediglich ein einziges Element als Zwischenelement zwischen Bremsfläche und stillzulegender Sekundärantriebsstrangkomponente vorzusehen ist.

Um die wirksame Bremsfläche des Bremsrings 23 trotz engstem Bauraum möglichst groß auszubilden und um die zwischen Bremsring 23 und Schiebemuffe 12 wirkende Bremskraft zu steigern, sind die gegeneinander wirkenden Bremsflächen konisch in Form eines Kegelstumpfoberfläche ausgebildet. Außerdem liegt der Bremsring 23 mit seiner zum Differentialgehäuse 2 weisenden Oberfläche an diesem an, so dass eine weitere Oberflächenpaarung zwischen Bremsring 23 und Differentialgehäuse 2 gebildet ist, über deren ebenfalls bevorzugt konisch ausgebildeten Oberflächen die Bremskraft am Differentialgehäuse 2 abgestützt wird. Insgesamt wird der Bremsring 23 beim Bremsvorgang also zwischen der Schiebemuffe 12 und dem Differentialgehäuse 2 eingeklemmt und die Bremskraft stützt sich ganz maßgeblich unterZwischenschaltung des Bremsrings 23 bzw. durch diesen hindurch gegen das Differentialgehäuse 2 ab. Der Bremsring 23 kann so nicht nur besonders effektiv wirken, sondern kann infolge der bei einem Bremsvorgang fast ausschließlich auftretenden Scherbelastung dünn und platzsparend ausgestaltet werden.

Das Tellerfederpaket 21 ist damit nicht nur Rückstellfeder für den Ringkolben 18 und Ausrückfeder für die Kopplungseinrichtung 11, sondern auch Bremsfeder für den Bremsmechanismus.

Das Federelement in der in Figur 1 gezeigten Ausführungsform wirkt nicht unmittelbar, sondern nur mittelbar unter Zwischenschaltung von weiteren Bauteilen auf die Schiebemuffe 12, die letztlich die formschlüssige Kraftübertragung zwischen äußerem Differentialkorb 4 und innerem Differentialkorb 10 gewährleistet. Diese Form des Kraftflusses ermöglicht das Einrichten eines Spiels zwischen der Schiebmuffe 12 und den auf die Schiebemuffe 12 beim Kopplungsvorgang (Disconnect-Betrieb => Connect-Betrieb) bzw. beim Entkopplungsvorgang (Connect-Betrieb => Disconnect-Betrieb) unmittelbar wirkenden Bauteilen Druckring 20 bzw. Ringkolben 18. Hierdurch wird ermöglicht, dass die Schiebemuffe 12 im Connect-Betrieb reibungsarm und frei von Axialkräften rotieren kann und sich lediglich dann an den Ringkolben 18 oder den Druckring 20 anlehnt, wenn sie in axialer Richtung auszuwandern droht.

Wie Figur 1 verdeutlicht, greift die Schiebemuffe 12 mit einem axial nach außen ragenden Mitnehmerkragen 26 in einen Spalt zwischen Mitnehmerscheibe 20 und Ringkolben 18 ein. Dieser ist im Verhältnis zur axialen Materialstärke des Mitnehmerkragens 26 so breit bemessen, das das vorstehend beschriebene Spiel gewährleistet ist. Zwischen Ringkolben 18 und Mitnehmerkragen 26 und/oder zwischen Mitnehmerkragen 26 und Mitnehmerscheibe 20 können grundsätzlich zusätzliche Wälzkörper vorgesehen sein, wobei in dem in Figur 1 gezeigten Ausführungsbeispiel hierauf verzichtet wurde. Dies hat den Hintergrund, dass an diesen Stellen lediglich die beim Entkopplungsvorgang (Ausrücken der Schiebemuffe 12 aus dem Verzahnungseingriff) oder Kopplungsvorgang (Einrücken der Schiebemuffe 12 in den Verzahnungseingriff) aufzubringenden Kräfte abgestützt werden müssen. Die an den genannten Stellen bestehenden Gleitlager haben sich hierfür als ausreichend erwiesen.

Der Ringkolben 18 weist ferner eine in den Ringkolben 18 eingebrachte Schmierölbohrung 24 auf, die dann, wenn sich der Ringkolben 18 in der Connect-Stellung befindet, mit einer Zulaufbohrung 25 im Differentialgehäuse 2 in Deckung gerät, so dass die Schmierölversorgung durch den Ringkolben 18 hindurch erfolgen kann.

Figur 2 zeigt eine zu der in Figur 1 dargestellten Ausführungsform alternative Ausgestaltung eines Differentials 1. Nachfolgend werden nur die wesentlichen Unterschiede in Bezug auf Figur 1 hervorgehoben.

Im Wesentlichen ist der Unterschied darin zu sehen, dass die Anordnung von Drucckolben 18 auf der einen und Federelement 21 sowie Bremsring 23 auf der anderen Seite in Bezug auf ihre Lage im Differentialgehäuse 2 und in Relation zur Schiebemuffe 12 umgekehrt wurde. Der Druckkolben 23 liegt radial innerhalb des Federelements 21 und des Bremsrings 23 sowie radial innerhalb der Schiebemuffe 12. Die Schiebemuffe 12 hat demnach einen radial nach innen ragenden Mitnehmerkragen 26.

Nachteilig an dieser Ausgestaltung ist zwar, dass etwaige Druckölbohrungen 19 zum Druckkolben 18 (in Figur 2 nicht gezeigt) durch die Wandung des Differentialgehäuses 2 geführt werden müssen, um das Drucköl an dem Flansch der linken Halbwelle (Ausgangsglied 6) vorbeiführen zu können. Gleichwohl hat die in Figur 2 gezeigte Ausgestaltung auch Vorteile.

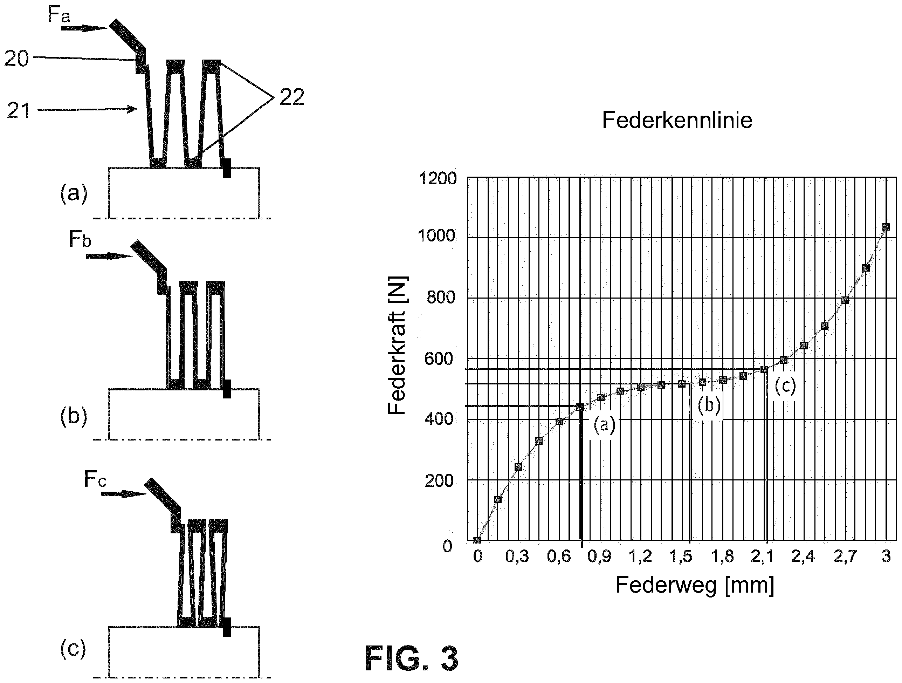

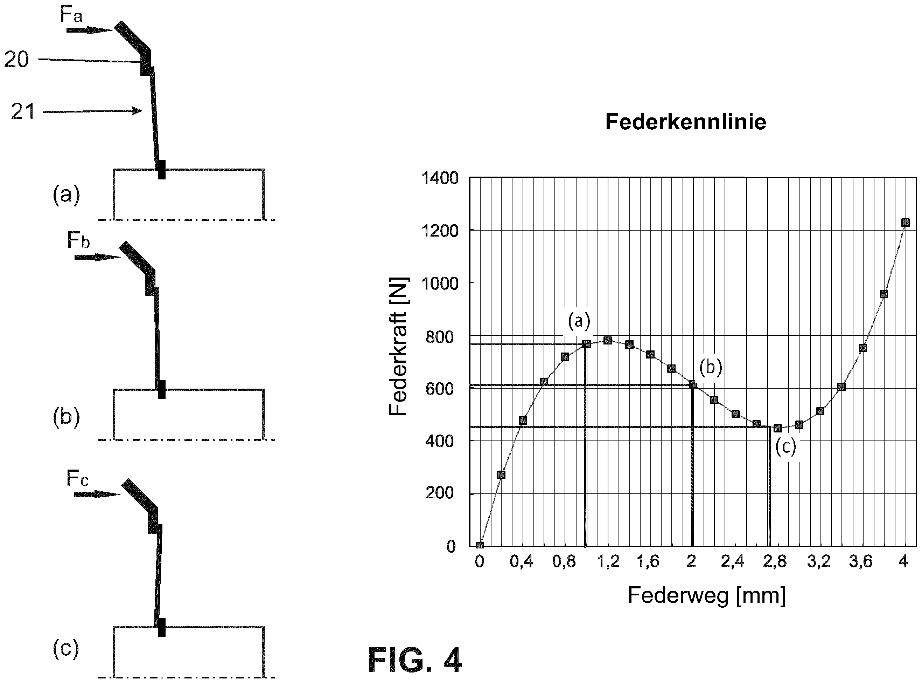

Das in Figur 1 und Figur 3 gezeigte Tellerfederpaket 21 kann durch ein einziges Federelement, insbesondere eine Tellerfederscheibe, ersetzt werden (siehe auch Figur 4), da ein solches Federelement infolge des größeren Durchmessers den benötigten Federweg allein zu gewährleisten vermag. Die Federkräfte können durch eine geeignete Materialauswahl und eine Auswahl der Materialstärke gut beeinflusst werden und ein Verformen beim Kopplungsvorgang über die Nulllage hinaus ist ebenfalls möglich, jedoch lässt sich mit nur einer einzelnen Tellerfederscheibe eine gegenüber dem in Figur 1 gezeigten Tellerfederpaket 21 noch günstigere, echt negative Federkennlinie besser realisieren, was die nachfolgend beschriebenen Figuren 3 und 4 noch verdeutlichen.

Eine weitere Besonderheit der in Figur 2 gezeigten Ausführungsform, die gleichwohl auch bei der in Figur 1 gezeigten Ausführungsform zum Einsatz kommen kann, ist, dass der innere Differentialkorb 10 ausschließlich auf den Ausgangsgliedern 6 gelagert ist. Es sind keine Radiallager vorgesehen, über die sich der innere Differentialkorb 10 im Differentialgehäuse 2 abstützt.

In Figur 4 ist das oben bereits angesprochene Federelement als Einzeltellerfeder und in Figur 3 als Tellerfederpaket 21 in jeweils drei verschiedenen Zuständen (a), (b) und (c) gezeigt. Zustand (a) zeigt den Disconnect-Zustand, bei dem keine äußeren Betätigungskräfte auf das Federelement wirken und die Abbremseinrichtung die Bremskraft bereitstellt. Zustand (c) zeigt den Connect-Zustand, bei dem das Federelement in dem in Figur 3 und in Figur 4 illustrierten Beispielen über die Nulllage hinaus zusammengedrückt ist, was beim Tellerfederpaket 21 durch die Anordnung der in axialer Richtung verschieblichen Abstandsringe 22 möglich ist, die die einzelnen Tellerfedern des Tellerfederpakets 21 zur Gewährleistung der erwünschten degressiven Federkennlinie voneinander beabstanden. Zustand (b) verdeutlicht einen Zwischenzustand, hier in etwa die jeweilige Nulllage des Federelements.

Anhand der in Figur 4 gezeigten und im relevanten Teilbereich negativen Federkennlinie der Einzeltellerfeder lässt sich erkennen, dass die auf die Mitnehmerscheibe 20 auszuübende Federkraft Fₐ, die nötig ist, um das Tellerfederpaket 21 zu komprimieren (Beginn des Kopplungsvorgangs Disconnect => Connect), trotz fortschreitendem Einrücken des Federelements größer ist, als die Federkraft F_{c}, die nötig ist, das Tellerfederpaket 21 in Zustand (c) zu halten (Connect-Betrieb). Die Federkraft F_{b}, die auf das Tellerfederpaket 21 beim Durchlaufen der Nulllage minimal aufzubringen ist, um den Kopplungsvorgang fortzusetzen, liegt also bevorzugt zwischen Fₐ und F_{c} (Fₐ > F_{b} > Fc).

Bei Verwendung des in Figur 3 gezeigten Tellerfederpakets 21 lässt sich bei vertretbarem konstruktiven Aufwand eine echt negative Federkennlinie nicht ohne weiteres realisieren, so dass das als Federelement verwendete Tellerfederpaket 21 im für die beschriebene Anwendung relevanten Teilabschnitt erkennbar eine deutlich degressive Kennlinie aufweist, bei der sich die auf die Mitnehmerscheibe 20 auszuübende Federkraft Fₐ, die nötig ist, um das Tellerfederpaket 21 zu komprimieren (Beginn des Kopplungsvorgangs Disconnect => Connect), trotz fortschreitender Komprimierung des Tellerfederpakets 21, nur geringfügig kleiner ist, als die Federkraft F_{c}, die nötig ist, um das Tellerfederpaket 21 in Zustand (c) zu halten (Connect-Betrieb).

Die im Connect-Betrieb dauerhaft zur Verfügung zu stellende aktive Betätigungskraft kann so bei gleichzeitiger Gewährleistung einer hohen passiven Bremsenbetätigungskraft minimiert werden.

### Bezugszeichenliste

- 1: Differential
- 2: Differentialgehäuse
- 3: Eingangsglied
- 4: äußerer Differentialkorb
- 5: Differentialgetriebe
- 6: Ausgangsglieder
- 7: Ausgleichsradträger
- 8: Ausgleichsrad
- 9: Seitenrad
- 10: innerer Differentialkorb
- 11: Kopplungseinrichtung
- 12: Schiebemuffe
- 13: Mitnehmerring
- 14: Synchronring
- 15: Synchronisation
- 16: Wälzlager (zur Lagerung des äußeren Differentialkorbs)
- 17: Wälzlager (zur Lagerung des inneren Differentialkorbs)
- 18: Ringkolben
- 19: Druckölbohrung
- 20: Mitnehmerscheibe
- 21: Tellerfederpaket
- 22: Abstandsringe
- 23: Bremsring
- 24: Schmierölbohrung
- 25: Zulaufbohrung
- 26: Mitnehmerkragen

## Patentansprüche

1. Differential (1) für ein Kraftfahrzeug mit
- einem Eingangsglied (3) und zumindest zwei Ausgangsgliedern (6), sowie
- einer zwischen Eingangsglied (3) und Ausgangsgliedern (6) angeordneten formschlüssig wirkenden Differentialeinheit, über die der Antriebsleistungsfluss von dem Eingangsglied (3) auf die Ausgangsglieder (6) übertragen wird,
wobei zwischen dem Eingangsglied (3) und den Ausgangsgliedern (6) eine Kopplungseinrichtung (11) vorgesehen ist, über die die Ausgangsglieder (6) und das Eingangsglied (3) voneinander entkoppelbar sind, **dadurch gekennzeichnet, dass** am Differential (1) eine Abbremseinrichtung vorgesehen ist, die eine Bremskraft auf das Eingangsglied (3) ausübt, wenn die Ausgangsglieder (6) vom Eingangsglied (3) entkoppelt sind.

2. Differential (1) nach Anspruch 1, **dadurch gekennzeichnet, dass** das Differential (1) einen äußeren, mit dem Eingangsglied (3) verbundenen Differentialkorb (4) und einen inneren, ein Differentialgetriebe (5) aufnehmenden Differentialkorb (10) aufweist und das Differential (1) eine Synchronisationseinheit umfasst, die zwischen dem äußeren Differentialkorb (4) und dem inneren Differentialkorb (10) angeordnet ist.

3. Differential (1) nach dem vorhergehenden Anspruch mit einem Differentialgehäuse (2), **dadurch gekennzeichnet, dass** der äußere Differentialkorb (4) über einen äußeren seitlichen Rand einer seitlichen Öffnung im Differentialgehäuse (2) mittels einer Lagerung (16) gelagert ist.

4. Differential (1) nach dem vorhergehenden Anspruch, **dadurch gekennzeichnet, dass** die
• Synchronisationseinheit, die Kopplungseinrichtung (11), eine Aktuatorik für die Betätigung der Synchronisationseinheit sowie eine Aktuatorik für die Betätigung der Kopplungseinrichtung (11) zumindest teilweise radial innerhalb der Lagerung (16) des äußeren Differentialkorbs (4) angeordnet sind und/oder
• die Abbremseinrichtung und eine Aktuatorik für die Betätigung der Abbremseinrichtung zumindest teilweise radial innerhalb der Lagerung (16) des äußeren Differentialkorbs (4) angeordnet sind.

5. Differential (1) nach einem der Ansprüche 2, 3 oder 4, **dadurch gekennzeichnet, dass** die Ausgleichsradträger (7), Ausgleichsrad (8) und Seitenrad (9) umfassenden Differentialglieder des Differentialgetriebes (5) ausschließlich innerhalb des inneren Differentialkorbs (10) geführt sind und der innere Differentialkorb (10) ausschließlich in einem Differentialgehäuse (2) und/oder in einem äu-ßeren Differentialkorb (4) gelagert ist.

6. Differential (1) nach einem der vorhergehenden Ansprüche in Verbindung mit Anspruch 2, **dadurch gekennzeichnet, dass** der äußere Differentialkorb (4) als seitlich offener, tassenförmiger Differentialkorb (4) ausgebildet ist.

7. Differential (1) nach einem der vorhergehenden Ansprüche in Verbindung mit Anspruch 5, **dadurch gekennzeichnet, dass** die Abbremseinrichtung einen Bremsring (23) aufweist, der beim Abbremsvorgang zwischen einer mit dem Eingangsglied (3) drehfest verbundenen Komponente eines Sekundärantriebsstrangs und dem Differentialgehäuse (2) verklemmt wird.

8. Differential (1) nach einem der vorhergehenden Ansprüche, **dadurch gekennzeichnet, dass** die Abbremseinrichtung zumindest eine Paarung von reibschlüssig gegeneinander wirkenden Bremsflächen aufweist, wobei die Bremsflächen eine Kegelstumpfoberfläche bilden oder Teile einer einzigen Kegelstumpfoberfläche darstellen.

9. Differential (1) nach einem der vorhergehenden Ansprüche in Verbindung mit Anspruch 7, **dadurch gekennzeichnet, dass** die Abbremseinrichtung ein Federelement umfasst und federbelastet auf das Eingangsglied (3) oder auf eine mit dem Eingangsglied (3) drehfest verbundene Komponente des Sekundärantriebsstrangs wirkt.

10. Differential (1) nach dem vorhergehenden Anspruch, **dadurch gekennzeichnet, dass** die Federkennlinie des die Bremskraft zur Verfügung stellenden Federelements negativ oder degressiv ist.

11. Differential (1) nach einem der beiden vorhergehenden Ansprüche, **dadurch gekennzeichnet, dass** das Federelement derart in das Differential (1) integriert ist, dass ein Ruhezustand des Federelements in einem Disconnect-Betrieb eingenommen wird, in dem die Ausgangsglieder (6) vom Eingangsglied (3) entkoppelt sind und in dem das Federelement (21) die Bremskraft zur Verfügung stellt, so dass die Bremskraft im Disconnect-Betrieb dauerhaft ohne Zuführung weiterer Energie zur Verfügung steht.

12. Differential (1) nach einem der Ansprüche 9, 10 oder 11, **dadurch gekennzeichnet, dass** das Federelement als Rückstellfeder der Kopplungseinrichtung (11) eingesetzt ist.

13. Differential (1) nach einem der Ansprüche 9 bis 12, **dadurch gekennzeichnet, dass** das Federelement von einem Tellerfederpaket oder einer einzelnen Tellerfeder gebildet ist und derart angeordnet und ausgebildet ist, dass es bis in seine Nulllage hinein oder über seine Nulllage hinaus verformbar ist.

14. Differential (1) nach einem der Ansprüche 9 bis 13, **dadurch gekennzeichnet, dass** das Differential (1) einen in Relation zum Federelement und zu Kopplungsgliedern (12) der Kopplungseinrichtung (11) radial außen liegenden Druckkolben (18) aufweist.

15. Differential (1) nach dem vorhergehenden Anspruch, **dadurch gekennzeichnet, dass** eine Schmierölversorgung für das Differentialgetriebe (5) und/oder für eine Lagerung des Differentialgetriebes durch den Druckkolben (18) erfolgt.

## Claims

1. Differential (1) for a motor vehicle with
- an input member (3) and at least two output members (6), and
- a positive-locking differential unit arranged between the input member (3) and the output members (6), via which the drive power flow is transmitted from the input member (3) to the output members (6),
wherein a coupling device (11) is provided between the input member (3) and the output members (6), via which the output members (6) and the input member (3) can be decoupled from one another, **characterized in that** a braking device is provided at the differential (1), which exerts a braking force on the input member (3) when the output members (6) are decoupled from the input member (3).

2. Differential (1) according to claim 1, **characterized in that** the differential (1) has an outer differential basket (4) connected to the input member (3) and an inner differential basket (10) accommodating a differential gear (5), and the differential (1) comprises a synchronization unit which is arranged between the outer differential basket (4) and the inner differential basket (10).

3. Differential (1) according to the preceding claim with a differential housing (2), **characterized in that** the outer differential basket (4) is mounted via an outer lateral edge of a lateral opening in the differential housing (2) by means of a bearing (16).

4. Differential (1) according to the preceding claim, **characterized in that** the
• synchronization unit, the coupling device (11), an actuator system for actuating the synchronization unit and an actuator system for actuating the coupling device (11) are arranged at least partially radially within the bearing (16) of the outer differential basket (4) and/or
• the braking device and an actuator for actuating the braking device are arranged at least partially radially within the bearing (16) of the outer differential basket (4).

5. Differential (1) according to one of claims 2, 3 or 4, **characterized in that** the differential members of the differential gear (5) comprising the differential gear carrier (7), differential gear (8) and side gear (9) are guided exclusively within the inner differential basket (10) and the inner differential basket (10) is mounted exclusively in a differential housing (2) and/or in an outer differential basket (4).

6. Differential (1) according to one of the preceding claims in conjunction with claim 2, **characterized in that** the outer differential basket (4) is designed as a laterally open, cup-shaped differential basket (4).

7. Differential (1) according to one of the preceding claims in conjunction with claim 5, **characterized in that** the braking device has a brake ring (23) which, during the braking process, is clamped between a component of a secondary drive train, which is non-rotatably connected to the input member (3), and the differential housing (2).

8. Differential (1) according to one of the preceding claims, **characterized in that** the braking device has at least one pairing of braking surfaces acting in frictional engagement against one another, the braking surfaces forming a frustoconical surface or constituting parts of a single frustoconical surface.

9. Differential (1) according to one of the preceding claims in conjunction with claim 7, **characterized in that** the braking device comprises a spring element and acts in a spring-loaded manner on the input member (3) or on a component of the secondary driveline which is non-rotatably connected to the input member (3).

10. Differential (1) according to the preceding claim, **characterized in that** the spring characteristic of the spring element providing the braking force is negative or degressive.

11. Differential (1) according to one of the two preceding claims, **characterized in that** the spring element is integrated into the differential (1) in such a way that a rest state of the spring element is assumed in a disconnect mode, in which the output members (6) are decoupled from the input member (3) and in which the spring element (21) provides the braking force, so that the braking force is permanently available in disconnect mode without the supply of further energy.

12. Differential (1) according to one of claims 9, 10 or 11, **characterized in that** the spring element is used as a return spring of the coupling device (11).

13. Differential (1) according to one of claims 9 to 12, **characterized in that** the spring element is formed by a disc spring assembly or a single disc spring and is arranged and designed in such a way that it can be deformed into or beyond its zero position.

14. Differential (1) according to one of claims 9 to 13, **characterized in that** the differential (1) has a pressure piston (18) located radially on the outside in relation to the spring element and to coupling members (12) of the coupling device (11).

15. Differential (1) according to the preceding claim, **characterized in that** a lubricating oil supply for the differential gear (5) and/or for a bearing of the differential gear is provided by the pressure piston (18).

## Revendications

1. Différentiel (1) pour un véhicule automobile comprenant
- un organe d'entrée (3) et au moins deux organes de sortie (6), ainsi que
- une unité différentielle à action positive disposée entre l'organe d'entrée (3) et les organes de sortie (6), par l'intermédiaire de laquelle le flux de puissance motrice est transmis de l'organe d'entrée (3) aux organes de sortie (6),
dans lequel il est prévu entre l'organe d'entrée (3) et les organes de sortie (6) un dispositif de couplage (11) par lequel les organes de sortie (6) et l'organe d'entrée (3) peuvent être découplés l'un de l'autre, **caractérisé en ce qu'**il est prévu sur le différentiel (1) un dispositif de freinage qui exerce une force de freinage sur l'organe d'entrée (3) lorsque les organes de sortie (6) sont découplés de l'organe d'entrée (3).

2. Différentiel (1) selon la revendication 1, **caractérisé en ce que** le différentiel (1) présente un panier de différentiel extérieur (4) relié à l'organe d'entrée (3) et un panier de différentiel intérieur (10) recevant un engrenage différentiel (5) et le différentiel (1) comprend une unité de synchronisation qui est disposée entre le panier de différentiel extérieur (4) et le panier de différentiel intérieur (10).

3. Différentiel (1) selon la revendication précédente, comprenant un boîtier de différentiel (2), **caractérisé en ce que** le panier de différentiel extérieur (4) est supporté par un bord latéral extérieur d'une ouverture latérale dans le boîtier de différentiel (2) au moyen d'un palier (16).

4. Différentiel (1) selon la revendication précédente, **caractérisé en ce que**
• l'unité de synchronisation, le dispositif de couplage (11), un système d'actionnement pour l'actionnement de l'unité de synchronisation ainsi qu'un système d'actionnement pour l'actionnement du dispositif de couplage (11) sont disposés au moins partiellement radialement à l'intérieur du palier (16) du panier de différentiel extérieur (4) et/ou
• le dispositif de freinage et un système d'actionnement pour l'actionnement du dispositif de freinage sont disposés au moins partiellement radialement à l'intérieur du palier (16) du panier de différentiel extérieur (4).

5. Différentiel (1) selon l'une des revendications 2, 3 ou 4, **caractérisé en ce que** les éléments différentiels de l'engrenage différentiel (5) comprenant le support de roue de compensation (7), la roue de compensation (8) et la roue latérale (9) sont guidés exclusivement à l'intérieur du panier de différentiel intérieur (10) et le panier de différentiel intérieur (10) est logé exclusivement dans un boîtier de différentiel (2) et/ou dans un panier de différentiel extérieur (4).

6. Différentiel (1) selon l'une des revendications précédentes en combinaison avec la revendication 2, **caractérisé en ce que** le panier de différentiel extérieur (4) est réalisé sous la forme d'un panier de différentiel (4) en forme de coupelle, ouvert latéralement.

7. Différentiel (1) selon l'une des revendications précédentes en combinaison avec la revendication 5, **caractérisé en ce que** le dispositif de freinage comporte une bague de freinage (23) qui, lors du processus de freinage, est coincée entre un composant d'une chaîne cinématique secondaire solidaire en rotation de l'organe d'entrée (3) et le boîtier de différentiel (2).

8. Différentiel (1) selon l'une des revendications précédentes, **caractérisé en ce que** le dispositif de freinage présente au moins une paire de surfaces de freinage agissant l'une contre l'autre par friction, les surfaces de freinage formant une surface tronconique ou constituant des parties d'une surface tronconique unique.

9. Différentiel (1) selon l'une des revendications précédentes en combinaison avec la revendication 7, **caractérisé en ce que** le dispositif de freinage comprend un élément élastique et agit sous la contrainte d'un ressort sur l'organe d'entrée (3) ou sur un composant de la chaîne cinématique secondaire solidaire en rotation de l'organe d'entrée (3).

10. Différentiel (1) selon la revendication précédente, **caractérisé en ce que** la caractéristique de ressort de l'élément élastique fournissant la force de freinage est négative ou dégressive.

11. Différentiel (1) selon l'une des deux revendications précédentes, **caractérisé en ce que** l'élément élastique est intégré dans le différentiel (1) de telle sorte qu'un état de repos de l'élément élastique est adopté dans un mode de déconnexion, dans lequel les organes de sortie (6) sont découplés de l'organe d'entrée (3) et dans lequel l'élément élastique (21) fournit la force de freinage, de sorte que la force de freinage est disponible en permanence dans le mode de déconnexion sans apport d'énergie supplémentaire.

12. Différentiel (1) selon l'une des revendications 9, 10 ou 11, **caractérisé en ce que** l'élément élastique est utilisé comme ressort de rappel du dispositif de couplage (11).

13. Différentiel (1) selon l'une des revendications 9 à 12, **caractérisé en ce que** l'élément élastique est formé par un paquet de rondelles élastiques ou par une rondelle élastique individuelle et est disposé et configuré de telle sorte qu'il est déformable jusqu'à sa position zéro ou au-delà de sa position zéro.

14. Différentiel (1) selon l'une des revendications 9 à 13, **caractérisé en ce que** le différentiel (1) présente un piston de pression (18) situé radialement à l'extérieur par rapport à l'élément élastique et aux organes de couplage (12) du dispositif de couplage (11).

15. Différentiel (1) selon la revendication précédente, **caractérisé en ce qu'**une alimentation en huile de lubrification pour l'engrenage différentiel (5) et/ou pour un palier de l'engrenage différentiel est effectuée par le piston de pression (18).
